# EUROPEAN PATENT SPECIFICATION

(11) **EP 2 480 394 B1**
(45) Date of publication and mention of the grant of the patent: **21.05.2014**
(21) Application number: 10762816.6
(22) Date of filing: 24.09.2010
(51) Int. Cl.: B29C 49/64, B29B 13/02, B29C 49/06, B29C 35/16

(54) **METHOD FOR RE-HEATING PREFORMS**
VERFAHREN ZUR ERHITZUNG VON VORFORMLINGEN
PROCÉDÉ POUR RÉCHAUFFER DES PRÉFORMES

(30) Priority: 24.09.2009 US 245522 P
(43) Date of publication of application: 01.08.2012
(73) Proprietor: Plastipak Packaging, Inc., Plymouth, MI 48170 (US)
(72) Inventor: DARR, Richard, C., Medina OH 44256 (US)
(74) Representative: Weiss, Peter
(86) International application number: PCT/US2010/050188
(87) International publication number: WO 2011/038222

(56) References cited:
- WO-A1-01/19592
- WO-A1-02/087850
- WO-A1-2009/109777
- WO-A2-95/11791
- WO-A2-2007/008676
- US-A- 5 714 109
- US-A1- 2003 152 726
- US-A1- 2004 256 763

## Description

### TECHNICAL FIELD

The present invention relates in general to stretch blow molded containers, including containers comprised of polypropylene, and to methods for making such containers.

### BACKGROUND

Injection stretch blow molding (ISBM) is a technology that is known in the container industry. The use of ISBM technologies can allow for high-speed production of plastic containers. ISBM technology is commonly used in the production of polyethylene terephthalate (PET) containers. Polypropylene or polypropene (PP) is thermoplastic polymer also known in the field of plastic containers. Containers made with polypropylene may be rugged and resistant to many chemicals, and polypropylene containers are known to have many uses. However, the conventional processes for producing polypropylene containers generally do not achieve the high-speed production rates associated with ISBM technologies in the context of PET, as the plastic properties of polypropylene differ greatly from PET. Among other things, polypropylene typically has a lower density and specific heat than PET hence it can exhibit a narrower processing window. Moreover, polypropylene is typically more opaque than PET, which can detract from its visual/aesthetic appearance. Consequently, one cannot simply apply PET technology to PP preforms and containers and expect to inherently achieve the same or even similar results from a product or production standpoint.

Typically with an ISBM process, a plastic preform is formed and transported to a blow molder or blow molding machine. Prior to entering the blow molder, the preform will usually be heated to raise the temperature of the plastic to a point that permits stretching the preform in a mold. There is some amount of time t that occurs between the time the preform is heated to the time the preform enters the mold to be blow molded. During this period of time t, the preform will naturally lose heat, as the surrounding temperature is usually significantly below that of the heated preform. This can present challenges. If the temperature of the materials comprising the preform is too low in the blow molder, the preform may not stretch properly. However, if the preform is heated to too high a temperature, depending on the thickness of the preform, the outside of the preform may be overheated or "burned."

Heat can be applied to preforms in a number of ways. Without limitation, some known methods for heating preforms involve the application of infrared energy and quartz lamps. However, conventionally, the heat source is provided outside of the preform, and the energy or heat must penetrate the preform body from the outside to the inside. Because it is often desired that the inside of the preform is provided at a sufficient temperature T, simply applying heat in such methods will generally result in the inside of the preform having a temperature T, and the outside of the preform having a higher temperature, for example, T+ -12,22° C (10° F). With such methods, there is a risk that the result of achieving a desired inside temperature is an undesirable outside temperature, which in turn can lead to problems in blow molding a resultant container.

The WO 2009/109777 A1 discloses a method for providing an internal surface temperature profile of a thermoplastic preform during a stretch blow moulding production process comprising at least the steps of : (a) heating a plurality of in-line cold preforms in the production process to provide a plurality of in-line heated preforms; (b) diverting at least one of the in-line heated preforms to provide at least one off-line heated preform; (c) providing the remaining the in-line heated preforms to one or more stretch blow moulds for forming the heated preforms into blow moulded products; and (d) locating one or more temperature sensors inside the or each off-line heated preform of step (b) to provide an inside surface temperature profile of said preform(s).

The WO 2007/008676 A2 discloses a film making process comprising the introduction of a plastic melt to a nip between a calendar roll and a resilient roll, passing the plastic melt between the calendar roll and the resilient roll to produce the film, and controlling a roughness of the film by actively cooling an external surface of the resilient roll or adjusting the roughness of the film at a constant production rate and a constant nip pressure.

The WO 01/19592 A1 a thermoplastic film, microporous film, and laminates thereof, are made at high speeds. Bond strengths of film and nonwoven laminates are effectively controlled by air cooling devices which cause the air to flow substantially parallel to the extruded web during drawdown and provide a plurality of cooling air vortices to effectively cool the web.

In the WO 02/087850 A1 the invention relates to a method and device for regulating the temperature of parisons made of a thermoplastic material. After having been subjected to a temperature regulation, the parisons are shaped into a container inside a blowing mold by the action of a pressurized medium. While regulating the temperature, the parisons are heated by subjecting them to the action of a heat radiation and are cooled by blowing cooling air onto them at least in the surface area. The intensity of the cooling air blown onto the parisons is varied in order to compensate for a variation in the surface temperature of the parisons based on influencing parameters of the surrounding area. This is carried out in order to achieve an essentially constant surface temperature of the parisons during the simultaneous heating and cooling actions.

In the US 2003/152726 A1 polyester containers having a reduced coefficient of friction ("COF") are produced by increasing the surface roughness of the polyester using either thermal crystallization or solvent crystallization.

The US 5,714,109 A discloses a method and apparatus which allows blow-molded plastic containers to be manufactured at high rates of production independent of ambient environmental conditions. The method includes the steps of flowing ambient air over cooling coils to remove moisture, heating the air to a constant pre-determined temperature and delivering the conditioned air to the blow-molding oven. The apparatus includes a variable speed blower which forces ambient air at a predetermined volumetric flow rate over cooling coils and an electric heater to provide the blow molding oven with a constant volumetric flow rate of constant temperature and low humidity air.

Some conventional ISBM machines incorporate ventilation to cool the temperature on the outside of the preform, at or about the time the preform is heated, in an attempt to better balance the temperatures on the inside and outside portions of the preform. Ventilation systems known in the art involve air flow that is provided at about 14,63 km/h (800 feet per minute). Such ventilation is usually acceptable in connection with standard PET bottles, but is insufficient for injection stretch blow molding polypropylene containers. Moreover, preforms that involve higher degrees of orientation commonly require enhanced airflow, as the equilibrium of the temperatures between the inside and outside portions of the preform can be a factor in producing a commercially acceptable container.

Polypropylene preforms can be run on standard ISBM machines that are typically adapted for PET containers. However, such polypropylene preforms will commonly fail at the heating zone. Where typical polypropylene preforms may require a temperature coming out of heating at about 110° C (230° F) when such preforms are run on conventional ISBM machines, the inside temperature of the preform is typically about -12,22° C (10° F) cooler than the outside temperature of the preform. However, as noted, it is often desirable to provide a preform having a temperature balance or equilibrium, i.e., where the inside-outside temperature differential is at or near -17,77° C (0° F).

### SUMMARY

The invention is a method for making a container in accordance with claim 1 is disclosed.

### BRIEF DESCRIPTION OF THE DRAWINGS

Embodiments of the invention will now be described, by way of example, with reference to the accompanying drawings, wherein:
FIG. 1 is a perspective illustration of a centrifugal blower that may be used in a process for blow molding a preform;
FIG. 2 generally represents an airflow diagram associated with a blower of the type shown in FIG. 1;
FIG. 3 is a perspective illustration of a ducted blower that may be used in connection with embodiments of the invention;
FIG. 4 is a perspective illustration of a blower unit comprised of a plurality of ducted blowers;
FIGS. 5 and 6 generally illustrate preforms configured in accordance with an embodiment of the invention;
FIGS. 7 and 8 generally illustrate containers formed in accordance with teachings of the invention;
FIGS. 9 and 10 generally illustrate other containers formed in accordance with teachings of the invention; and
FIGS. 11 and 12 generally illustrate enlarged partial views associated with FIGS. 9 and 10.

### DETAILED DESCRIPTION

Reference will now be made in detail to embodiments of the present invention, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended claims.

the present invention recognizes that with preforms it can be desirable to proyide a heated preform to an ISBM process that has an inside-outside temperature balance or equilibrium that may approach -17,77° C (0° F). In an embodiment of the invention, the ISBM process may be modified such that airflow via blowers, which may be located behind heat shields, is provided to be at least 11,1 m/s (40,23 km/h) (2,200 feet per minute). Notably, for some embodiments, the blower airflow may be provided at least at 54,86 km/h (3,000 feet per minute). For example, in an embodiment of the invention, such an airflow may be accomplished by providing comparatively larger, ducted blowers that substantially uniformly and controllably distribute airflow across the face of the preform.

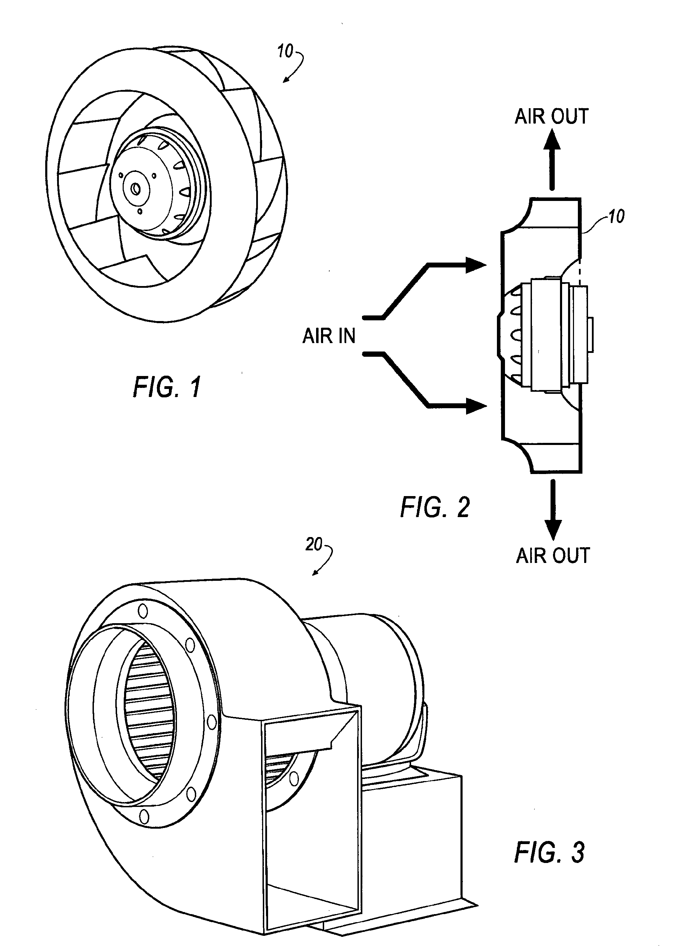

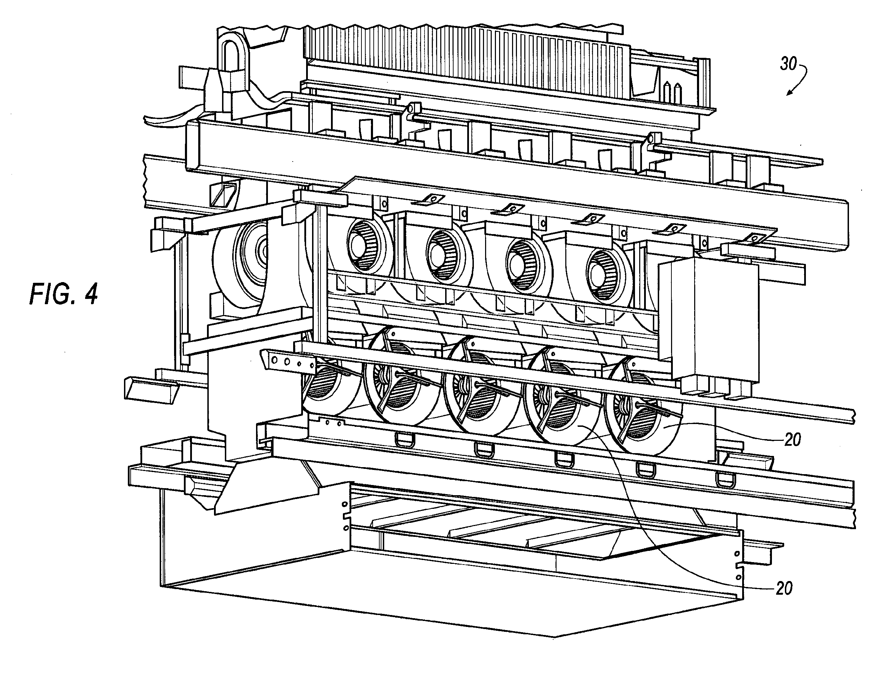

FIG. 1 generally illustrates an example of a centrifugal blower 10 that may be provided behind a heat shield in connection with an ISBM process for blow molding a PET preform. FIG. 2 generally represents an airflow diagram associated with a blower of the type shown in FIG. 1. However, it has been discovered that the airflow associated with such conventional blowers is generally too low to be useful for polypropylene processing. Moreover, as generally illustrated in FIG. 2, such conventional blowers may provide a nonuniform flow based on the associated fan design. The present invention envisions, among other things, providing heat or energy (for example, via infrared or quartz heaters/lamps) to at least the outside of a preform (e.g., to indirectly heat the inner surface or portion of the preform), and the use of blowers that are capable of providing a significantly increased air flow (e.g., 40,23 km/h (2,200 feet per minute) or more) in a more uniform manner to preforms - which may include polypropylene preforms. Without limitation, an example of a larger, ducted blower 20 that may be used in connection with the present invention is generally illustrated in FIG. 3. Moreover, as generally illustrated in FIG. 4, a plurality of ducted blowers 20 may be combined into a blower unit 30. The preforms may then be stretch blow molded in a subsequent operation to form a resultant container.

Further, it has been discovered that such alterations with respect to the method employed for cooling the preforms can allow for the use of thicker preforms - including significantly thicker preforms than those previously used in the industry. That is, the ability to heat the preforms at higher temperatures and/or for longer durations, based on increased ventilation power, can permit preform designs to include greater wall thickness (as a thicker wall requires more heat or time to bring the inside of the preform to a desired temperature).

Moreover, the ability to utilize increased wall thickness can provide for better wall distribution in certain container configurations, and portions thereof, including for containers of at least 1 liter, and potentially for containers of 2 liters or greater content volume.

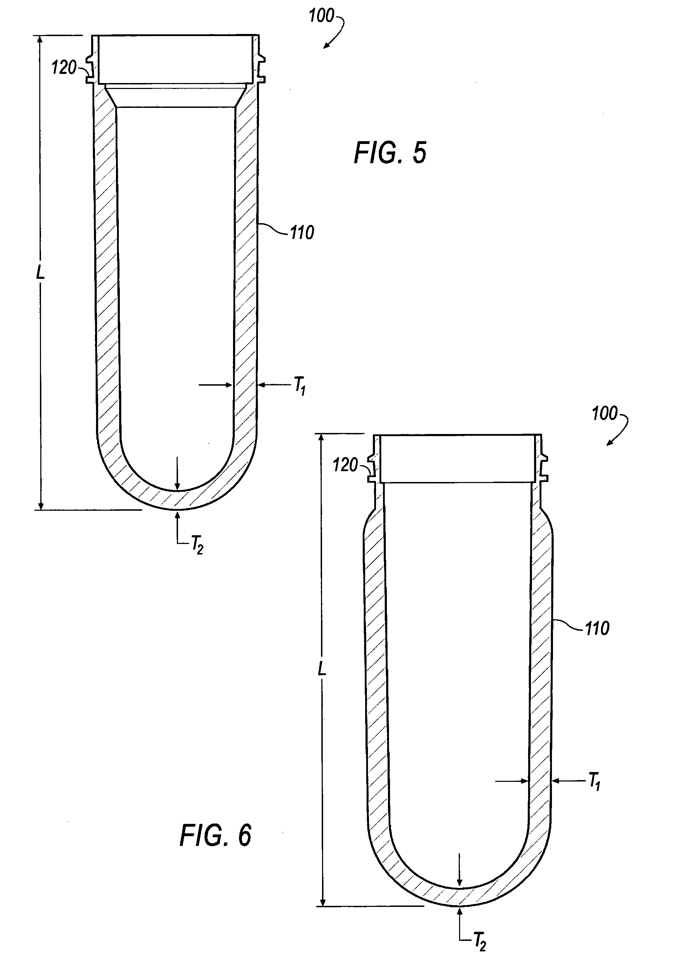

FIGS. 5 and 6 generally illustrate preforms 100, which may be comprised of polypropylene, that are configured in accordance with teachings of the present invention. The exemplary preform 100 illustrated in FIG. 5 may, for instance, have a wall thickness that exceeds 6 mm and a body weight of about 70+ 2 grams. By way of example, and without limitation, with reference to Fig. 5, the preform may have a total height, or length L, of 5.056 inches (128.42 mm) + 0.06 inches (1.524 mm), and the preform may have a sidewall thickness Ti of 0.243 inches (6.17 mm) + 0.01 inches (0.254 mm), and a bottom thickness T₂ of 0.194 inches (4.93 mm) + 0.01 inches (0.254 mm). The exemplary preform 100 illustrated in FIG. 6 - which includes a reverse taper configuration - may have a wall thickness of less than 6 mm (e.g., 5.9 mm) and a body weight of 75+ 2 grams. By way of example, and without limitation, with reference to Fig. 6, the preform may have a total height, or length L, of 5.031 inches (127.79 mm) + 0.06 inches (1.524 mm), and the preform may have a sidewall thickness Ti of 0.233 inches (5.92 mm) + 0.01 inches (0.254 mm), and a bottom thickness T₂ of 0.186 inches (4.72 mm) + 0.01 inches (0.254 mm). Further, as generally illustrated in FIG. 6, the preform 100 may also provides a body 110 that is wider (in diameter) than the associated support ledge 120. Among other things, the present invention may permit the production and use of "shorter" preforms, including polypropylene preforms. For example, without limitation, such preforms 100 may be used to form 2040 ml polypropylene containers, but may have lengths L (e.g., 123.495 mm (4.862 inches) + 7.62 mm (0,30 inches) and 123.139 mm (4.848 inches) + 7.62 mm (0.30 inches), respectively) that are similar to lengths associated with preforms used to form 600 ml and 1080 ml containers. Moreover, preforms 100 may be subjected to L/L draws that are greater than 2.

Moreover, by providing better control of the temperatures associated with the inside and outside portions of the preforms, including polypropylene preforms, the quality of the resulting containers may be improved. In an embodiment, the temperature of the outer surface of a preform may be provided/maintained within the range of about 115,55° C (240° F) to 118,33° C (245° F). In such a context, it is has been found to often be desirable to keep the outer surface temperature at or below about 121,11° C (250° F). With respect to such embodiments, the temperature on the inner surface of the preform may be provided/maintained within the range of about 115,55° C (240° F) to about 137,77°C (280°F).

further, it has been found that significant advantages can be obtained by such purposeful control of the inside and outside temperatures of the preform (as well as the differential therebetween). Among other things, controlling the heating as such, and preventing the overheating of the preform, can result in a container with significantly less haze - that is, a container that is quantitatively less "cloudy." Polypropylene containers that are injection stretch blow molded in accordance with the teachings of the invention may have reduced haze factors (i.e., transmission haze). For instance, the transmission haze for a number of common container volumes can be less than 35.0. Moreover, it has been found that the associated haze factor will generally decrease the more the stretch ratio (expansion of preform to resultant container) increases. For example, without limitation, embodiments of 600 ml, 1080 ml, and 2040 ml containers may exhibit transmission hazes that are less than 35.0, less than 33.0, and less than 25.0, respectively. This can be quite desirable as polypropylene typically begins as a more hazy resin than PET, and conventional PP container production methods known in the industry commonly result in container with haze factors that are aesthetically not acceptable to many industries and customers. By being able provide a "clearer" PP container, more industry categories may have an option for product packaging. "Transmission haze" may be described as a forward scattering of light from the surface of a nearly clear specimen viewed in transmission. Transmission haze can be measured, for example, using conventional instruments, e.g., a HunterLab D25P sensor (which was used to measure the aforementioned transmission hazes). Additional information concerning the measurement of haze may be found, without limitation, in HunterLab Application Note, vol. 9, no. 6 (06/08) (Insight on Color).

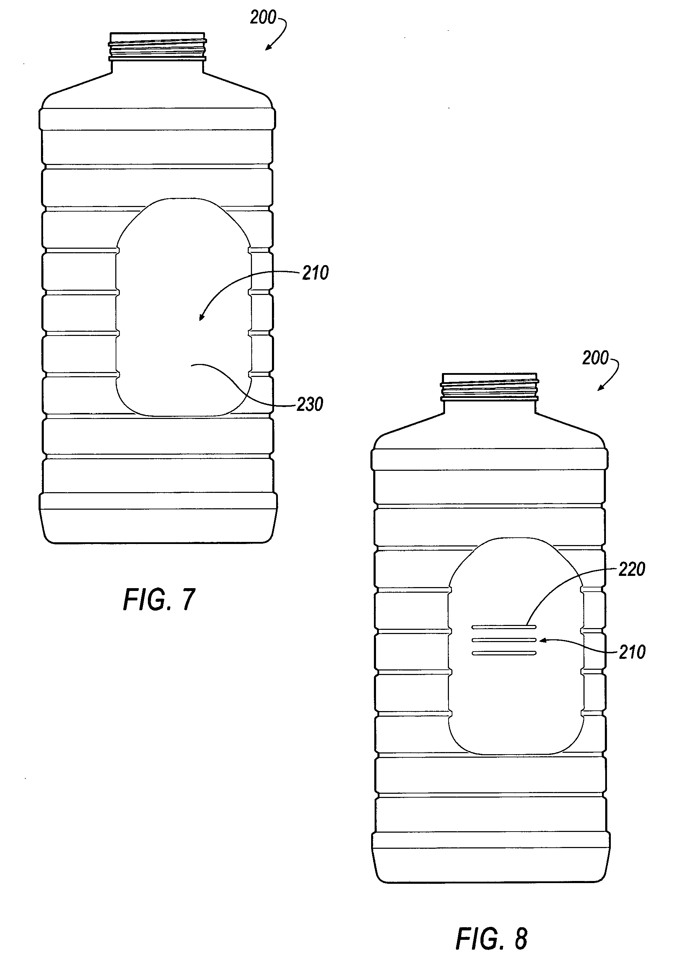

Without limitation, examples of polypropylene containers 200 formed in accordance with the teachings of the present invention are illustrated in FIGS. 7 and 8. As generally illustrated, if desired, such containers 200 may include grip portions, generally designated 210. It has been found that the grip portion 210 configuration illustrated in FIG. 7 can provide some additional benefits when compared to the configuration shown in FIG. 8. For example, the removal of the horizontal ribs 220 generally shown in FIG. 8 can be beneficial for some designs. Further, the extended oval finger well 230 can help to eliminate bending. While those features were specifically mentioned, it is important to note that the invention is not so limited, and various other structural configurations are also within the scope and spirit of the invention.

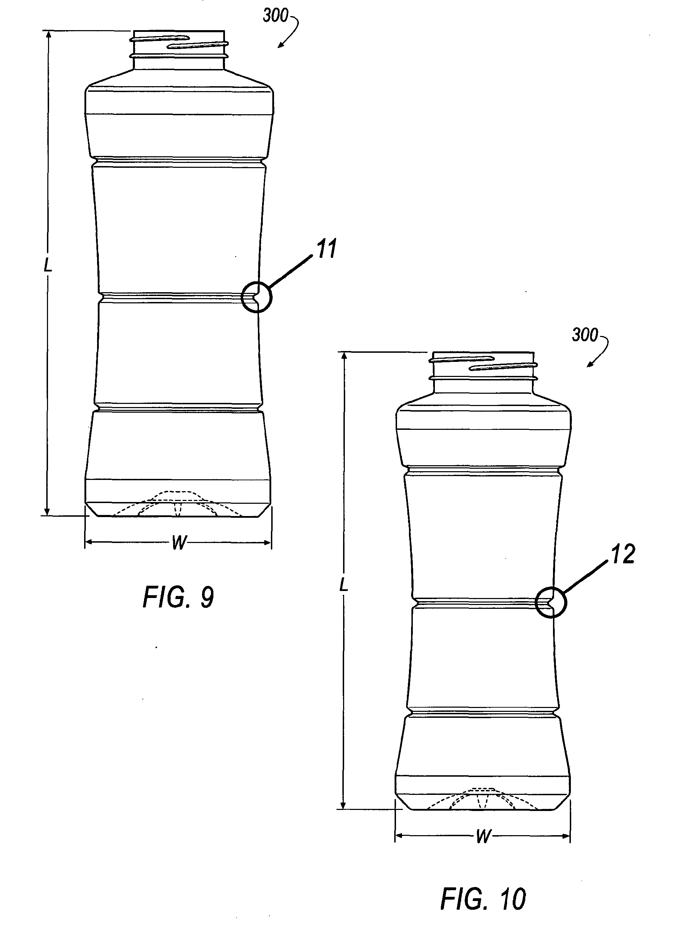

Without limitation, yet further examples of polypropylene containers 300 formed in accordance with the teachings of the present invention are illustrated in FIGS. 9 and 10. By way of example, without limitation, the container 300 shown in FIG. 9 may have a total height, or length **L**, of 9.432 inches (239.57 mm) ± 0.060 inches (1.524 mm), and a base width **W** of 3.650 inches (92.71 mm) ± 0.060 inches (1.524 mm). Similarly, and without limitation, the container 300 shown in FIG. 10 may have a total height, or length **L**, of 8.100 inches (205.74 mm) ± 0.060 inches (1.524 mm), and a base width **W** of 3.071 inches (78.00 mm) ± 0.060 inches (1.524 mm).

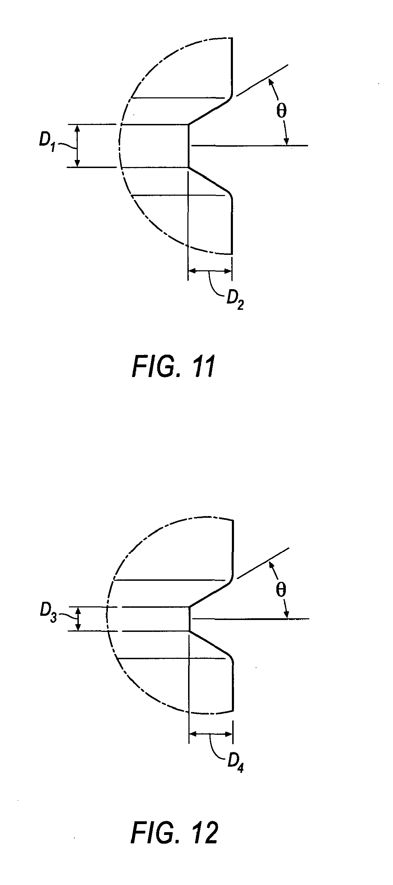

FIGS. 11 and 12 generally illustrate enlarged section views of portions of the sidewalls identified in FIGS. 9 and 10, respectively. For example and without limitation, with respect to the portions (or rib portions) shown in FIGS. 11 and 12, the rib angle θ may be 30°± 5°; the rib widths **D₁** and **D₃** may be 0.100 inches (2.54 mm) ± 0.05 inches (1.27 mm) and 0.056 inches (1.42 mm) ± 0.03 inches (0.762 mm); and the rib inset distances **D₂** and **D₄** may be 0.100 inches (2.54 mm) ± 0.05 inches (1.27 mm).

Further, in addition to providing for polypropylene containers with improved qualities, the invention can facilitate improved production times. For example, conventional ISBM manufacturing of polypropylene containers would result in containers of lesser quality being run at speeds of about 600 to 650 containers per hour, per cavity. By implementing the teachings of the present invention as discussed herein, containers of a higher quality may be produced at speeds of 900 or more containers per hour, per cavity - an efficiency increase of at least 38%, and perhaps as much as 50% or more.

## Claims

1. A method for making a container (200, 300) comprising:
providing a preform (100), wherein the preform (100) is comprised of polypropylene;
applying outside heat or energy to at least a portion of the preform (100) to an elevated temperature, such that the heat or energy heats an inner surface of the preform (100);
**characterized in**
applying an airflow to the preform (100) of at least about 11,1 m/s (2,200 ft/min) to maintain a temperature differential between the inner surface and the outside surface of the portion of the preform (100) being heated to within about -6,66° C (20° F) and, wherein the airflow applied to the preform (100) is provided substantially uniformly and controllably distributes airflow across the face of the preform (100).

2. The method of claim 1, including blow molding the preform (100) to form a container (200, 300).

3. The method of claim 1, wherein the airflow applied to the preform (100) is provided at least at about 15,2 m/s (3,000 ft/min).

4. The method of claim 1, wherein the outside heat or energy is provided by one of an infrared heater or lamp or by a quartz heater or lamp.

5. The method of claim 1, wherein the preform (100) has a sidewall thickness that exceeds 6 mm and a body weight of about 70 + 2 grams.

6. The method of claim 1, wherein a portion of the body of the preform (100) extends further radially outward than a support ledge provided in the neck portion of the preform (100).

7. The method of claim 1, wherein a resultant container (200, 300) is formed from the preform and the length of the resultant container is greater than two times the length of the preform.

8. The method of claim 1, wherein the temperature of the outer surface of the preform is provided or maintained below about 121,11° C (250° F).

9. The method of claim 1, wherein the temperature of the outer surface of the preform is provided or maintained within the range of about 115,55° C (240° F) to 118,33° C (245° F).

10. The method of claim 1, wherein the temperature of the inner surface of the preform is provided or maintained within the range of about 115,55° C (240° F) to 118,33° C (280° F).

11. The method of claim 1, wherein a container is formed from the preform by injection stretch blow molding, and the container has a transmission haze less than 35.0.

12. The method of claim 1, wherein a container is formed from the preform, and the container includes a grip portion.

13. The method of claim 1, wherein containers are produced at a rate of 900 or more per hour.

## Patentansprüche

1. Verfahren zur Herstellung eines Behälters (200, 300), umfassend:
Bereitstellen eines Vorformlings (100), wobei der Vorformling (100) aus Polypropylen besteht;
Anwenden von Hitze oder von Energie von außen auf mindestens einen Abschnitt des Vorfomlings (100) bis zu einer erhöhten Temperatur, so dass die Hitze oder die Energie eine Innenfläche des Vorformlings (100) erhitzt;
**gekennzeichnet durch**
das Anwenden eines Luftstroms von mindestens etwa 11,1 m/s (2.200 ft/min) auf den Vorformling (100), um einen Temperaturunterschied von etwa -6,66 °C (20 °F) zwischen der Innen- und der Außenfläche des erhitzten Abschnitts des Vorformlings (100) zu halten und wobei der auf den Vorformling (100) angewandte Luftstrom im Wesentlichen gleichmäßig bereitgestellt wird und in einer kontrollierbaren Weise einen Luftstrom über die Oberfläche des Vorfomlings (100) verteilt.

2. Verfahren nach Anspruch 1, einschließend das Blasformen des Vorformlings (100), um einen Behälter (200, 300) herzustellen.

3. Verfahren nach Anspruch 1, wobei der auf den Vorformling (100) angewandte Luftstrom mit mindestens etwa 15,2 m/s (3.000 ft/min) zugeführt wird.

4. Verfahren nach Anspruch 1, wobei die Hitze oder Energie von außen durch eines von einem Infrarotheizstrahler bzw. einer Infrarotlampe oder einem Quarz-Heizstrahler bzw. einer Quarzlampe zugeführt wird.

5. Verfahren nach Anspruch 1, wobei der Vorformling (100) eine Seitenwanddicke von mehr als 6 mm und ein Körpergewicht von etwa 70 +2 Gramm hat.

6. Verfahren nach Anspruch 1, wobei ein Abschnitt des Körpers des Vorformlings (100) sich weiter radial nach außen erstreckt als ein im Halsabschnitt des Vorformlings (100) bereitgestellter Stützvorsprung.

7. Verfahren nach Anspruch 1, wobei ein resultierender Behälter (200, 300) aus dem Vorformling geformt wird und die Länge des resultierenden Behälters größer ist als die zweifache Länge des Vorformlings.

8. Verfahren nach Anspruch 1, wobei die Temperatur der Außenfläche des Vorformlings bei unter etwa 121,11 °C (250 °F) bereitgestellt oder gehalten wird.

9. Verfahren nach Anspruch 1, wobei die Temperatur der Außenfläche des Vorformlings im Bereich von etwa 115,55 °C (240 °F) bis 118,33 °C (245 °F) bereitgestellt oder gehalten wird.

10. Verfahren nach Anspruch 1, wobei die Temperatur der Innenfläche des Vorformlings im Bereich von etwa 115,55 °C (240 °F) bis 118,33 °C (280 °F) bereitgestellt oder gehalten wird.

11. Verfahren nach Anspruch 1, wobei durch Spritz-Streckblasen ein Behälter aus dem Vorformling geformt wird und der Behälter eine Transmissionstrübung von weniger als 35,0 hat.

12. Verfahren nach Anspruch 1, wobei ein Behälter aus dem Vorformling geformt wird und der Behälter einen Griffabschnitt einschließt.

13. Verfahren nach Anspruch 1, wobei Behälter mit einer Geschwindigkeit von 900 pro Stunde oder mehr hergestellt werden.

## Revendications

1. Procédé de fabrication d'un récipient (200, 300) comprenant:
prévoir une préforme (100), où la préforme (100) est réalisée en polypropylène
appliquer de la chaleur ou de l'énergie extérieure sur au moins une partie de la préforme (100) à température élevée, de sorte que la chaleur ou l'énergie réchauffe une surface intérieure de la préforme (100) ;
**caractérisé par** le fait
d'appliquer un flux d'air sur la préforme (100) d'au moins environ 11,1 m/s (2.200 ft/min), pour maintenir un différentiel de température entre la surface intérieure et la surface extérieure de la partie de la préforme (100) chauffée à environ -6,66°C (20°F) et où le flux d'air appliqué sur la préforme (100) est prévu de manière sensiblement uniforme et répartit de manière contrôlable le flux d'air sur la face de la préforme (100).

2. Procédé selon la revendication 1, comportant le moulage par soufflage de la préforme (100), pour former un récipient (200, 300).

3. Procédé selon la revendication 1, dans lequel le flux d'air appliqué sur la préforme (100) est prévu à au moins environ 15,2 m/s (3.000 ft/min).

4. Procédé selon la revendication 1, dans lequel la chaleur ou l'énergie extérieure est fournie par l'un parmi un dispositif de chauffage infrarouge ou un élément chauffant ou lampe au quartz.

5. Procédé selon la revendication 1, dans lequel la préforme (100) présente une épaisseur de paroi latérale qui est supérieure à 6 mm et un poids de corps d'environ 70 + 2 grammes.

6. Procédé selon la revendication 1, dans lequel une partie du corps de la préforme (100) s'étend davantage radialement vers l'extérieur qu'un rebord de support prévu dans la partie de goulot de la préforme (100).

7. Procédé selon la revendication 1, dans lequel un récipient résultant (200. 300) est formé à partir de la préforme et la longueur du conteneur résultant est supérieure à deux fois la longueur de la préforme.

8. Procédé selon la revendication 1, dans lequel la température de la surface extérieure de la préforme est prévue ou maintenue au-dessous d'environ 121,11° C (250 ° F).

9. Procédé selon la revendication 1, dans lequel la température de la surface extérieure de la préforme est prévue ou maintenue de l'ordre d'environ 115,55° C (240° F) à 118,33° C (245° F).

10. Procédé selon la revendication 1, dans lequel la température de la surface intérieure de la préforme est prévue ou maintenue de l'ordre d'environ 115,55° C (240° F) à 118,33° C (280° F).

11. Procédé selon la revendication 1, dans lequel un récipient est formé à partir de la préforme par moulage par injection-étirage-soufflage, et le récipient présente un voile de transmission inférieur à 35,0.

12. Procédé selon la revendication 1, dans lequel un récipient est formé à partir de la préforme, et le récipient comporte une partie de préhension.

13. Procédé selon la revendication 1, dans lequel les récipients sont produits à une cadence de 900 ou plus par heure.
